# EUROPEAN PATENT SPECIFICATION

(11) **EP 1 800 782 B1**
(45) Date of publication and mention of the grant of the patent: **17.07.2013**
(21) Application number: 07106125.3
(22) Date of filing: 12.04.2006
(51) Int. Cl.: B23D 45/04, B27G 19/02, B23D 47/04

(54) **Chop saw with a rotating lower blade guard**
Kappsäge mit einem unteren drehbaren Blattklingenschutz
Scie pivotante avec capot protecteur inférieur rotatif

(30) Priority: 13.04.2005 US 671031 P
(43) Date of publication of application: 27.06.2007
(62) Divisional of application: 06112557.1
(73) Proprietor: Black & Decker, Inc., Newark, DE 19711 (US)
(72) Inventor: Meridith, Daryl S, York, PA 17402 (US); Kaye Jr., Thomas R, Bel Air, MD 21014 (US); Brendel, Lee M, Bel Air, MD 21014 (US); Wattenbach, Brian P, Menomonee Falls, WI 53051 (US); Gehret, Robert, Hampstead, MD 21074 (US); Samuelsen, Eric J, Stewartstown, PA 17363 (US); Kusmierski, Robert G, York, PA 17403 (US); Oktavec, Craig A, Forest Hill Maryland 21050 (US); Ayala, Adan, Baltimore, MD 21212 (US); Zhao, Jiangang, Baltimore, MD 21234 (US); Vogel, Stephanie L, York, PA 17403 (US); Wohltmann, Brian K, Rosedale, MD 21237 (US)
(74) Representative: Bell, Ian Stephen

(56) References cited:
- EP-A2- 0 407 204
- US-A- 1 830 151
- US-A- 4 805 504
- US-A- 5 181 448
- US-A- 5 203 245
- US-A- 5 287 779
- US-A- 5 353 670
- US-A- 5 950 514

## Description

This application derives priority from US Application No. 60/671,031, filed April 13, 2005.

This invention relates generally to a chop saw according to the preamble of claim 1.

Such a sow is known from US5203245.

Recent patents, such as U.S. Pat. Nos. 5,285,708 and 5,375,495, and applications, such as U.S. Pat. Appln. Pub. No. US 2003/0233921 A1, disclose optical alignment systems for chop saws and/or miter saws. Such optical alignment systems typically utilize a laser generator that projects a line on a workpiece to indicate the location at which one of the sides of the blade will enter the workpiece and purport to facilitate cutting the workpiece.

It is preferable to provide a laser assembly can be easily adjusted by the user.

Examples of saws of the prior art having link mechanisms for moving a lower blade guard are disclosed in US5181448 and US5203245.

According to the present invention, there is provided a chop saw comprising the features of claim 1.

Additional features and benefits of the present invention are described, and will be apparent from, the accompanying drawings and the detailed description below.

The accompanying drawings illustrate an embodiment of the invention according to the practical application of the principles thereof, and in which:
FIG. 1 is a side view of a chop saw according to the invention;
FIG. 2 is front view along line II-II of FIG. 1;
FIG. 3 illustrates the method of installing a laser assembly not according to the invention;
FIG. 4 is a partial side view of the saw assembly prior to installation of the laser assembly of FIG. 3;
FIG. 5 is a rear view of the laser assembly of FIG. 3;
FIG. 6 are partial front views of the laser assembly of FIG. 3, whereas FIGS. 6A-6B show the laser assembly without and with a rotating barrel, respectively;
FIG. 7 is a perspective view of the laser assembly of FIG. 3;
FIG. 8 illustrates two possible laser projections on a workpiece; and
FIG. 9 is a partial side view of an alternative example.

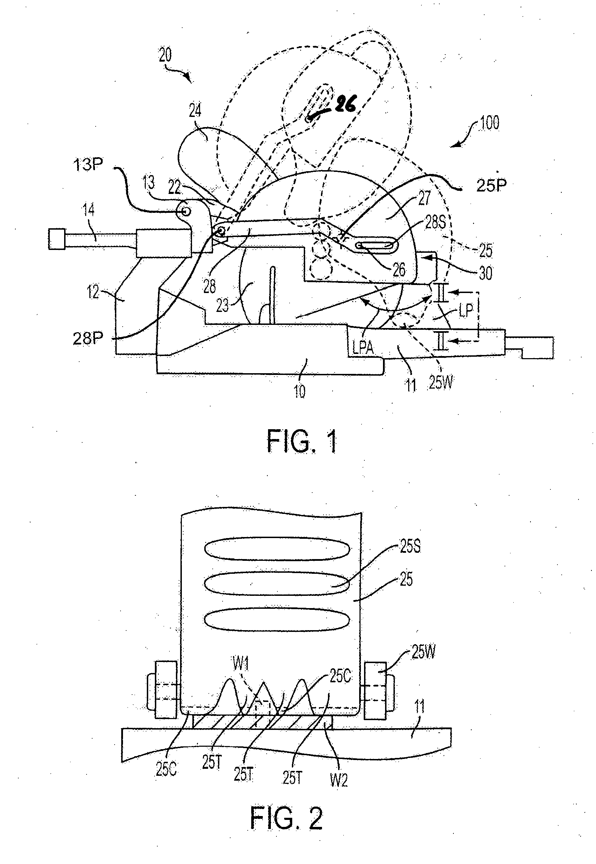

The invention is now described with reference to the accompanying figures, wherein like numerals designate like parts. The present invention is applicable to chop saws, miter saws and/or sliding miter saws, such as saw 100 shown in FIG. 1. Saw 100 includes a base assembly 10, and a saw assembly 20 pivotally supported by the base 10. Saw assembly 20 is moved from an upper position to a lower position for cutting a workpiece disposed on base assembly 10.

Base assembly 10 may include a table assembly 11 rotatably supported by base 10. Base assembly 10 may also include a housing 12 pivotally attached to table assembly 11 for changing the bevel angle of saw assembly 20.

Housing 12 may support a trunnion 13, which is connected to saw assembly 20 for moving saw assembly 20 between the upper and lower positions. Alternatively, trunnion 13 may be disposed on at least one rail 14 slidingly connected to housing 12.

Saw assembly 20 may include a pivotable arm 22 pivotably attached to trunnion 13 and rotating about pivot axis 13P, and a motor 24 for driving a blade 23. Arm 22 may also support upper blade guard 27, which covers an upper part of blade 23. Lower blade guard 25 is pivotally attached to upper blade guard 27 at pivot axis 25P. Persons skilled in the art will recognize that motor 24 may be supported by arm 22 and/or upper blade guard 27.

It is preferable to provide a mechanism to move the lower blade guard 25 and expose blade 23 when moving the saw assembly 20 between the upper and lower positions. Referring to FIG. 1, a link 28 is pivotally attached at one end 28P to the trunnion 13 or any other part of base assembly 10, including table assembly 11, housing 12 and/or rail(s) 14. Preferably, end 28P is below the pivot axis 13P.

According to the invention, the Link 28 may be pivotably attached to lower blade guard 25 via a boss 26 disposed on lower blade guard 25 Boss 26 is below pivot axis 25P. With such geometric arrangement between end 28P, boss 26 and pivot axes 25P, 13P, link 28 pushes the lower blade guard 25 upwardly when the saw assembly 20 is moved towards the lower position, unlike the typical arrangement where a link pulls the lower blade guard 25.

Preferably link 28 may have a slot 28S through which boss 26 slides along, to allow the user to move the lower blade guard 25 without moving saw assembly 20 to the lower position, thus exposing the blade 23 and allowing the user to replace blade 23.

Persons skilled in the art will recognize that having a link 28 which pushes, rather than pull, lower blade guard 25, thus exposing blade 23, may allow the motor 24 to be disposed closer to upper blade guard 27. This in turns provides for a smaller, more compact saw 100.

Referring to FIGS. 1-2, lower blade guard 25 may have wheels 25W pivotally attached thereto, as is well known in the art. Lower blade guard 25 may also have teeth 25T defining spaces therebetween. Such teeth 25T may allow a small workpiece W1 to be cut in a sliding action without catching on the lower blade guard 25. In other words, a user may dispose workpiece W1 on table assembly 11, and move saw assembly 20 forwardly and down towards the lower position (until lower blade guard 25 contacts table assembly 11). The user can then move saw assembly 20 rearwardly, cutting workpiece W1 without it catching unto lower blade guard 25 (even though lower blade guard 25 is contacting table assembly 11) as workpiece W1 would move in the space between teeth 25T.

Lower blade guard 25 may also have inner cam surfaces 25C along the edge contacting table assembly 11. Such cam surfaces 25C lift lower blade guard 25 when saw assembly 20 is moved rearwardly, again preventing a workpiece (such as W2) catching on to lower blade guard 25.

As mentioned above, U.S. Pat. Nos. 5,285,708 and 5,375,495, and U.S. Pat. Appln. Pub. No. US 2003/0233921 A1 suggest the desirability of providing a laser assembly on a chop saw for indicating where the blade will cut a workpiece disposed on base assembly 10. However, such laser assemblies may not be desired by all users. Accordingly, it is desirable to provide a saw that can be manufactured and sold without a laser assembly, and can easily be retrofitted by the user.

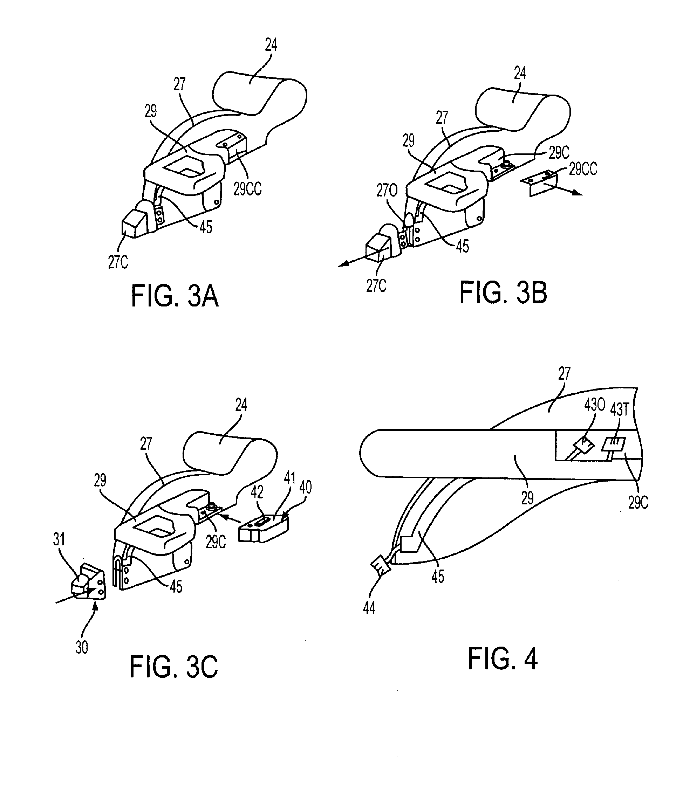

Referring to FIGS. 1 and 3, a handle assembly 29 may be attached to saw assembly 20 (and preferably to upper blade guard 27). FIG. 3A illustrates the saw assembly 20 without a laser assembly 30. A cover 27C is preferably disposed on upper blade guard 27 where the laser assembly 30 would be installed. Cover 27C may be held in place by screws threadingly engaging upper blade guard 27. In addition, handle assembly 29 may have a compartment 29C (see FIG. 3B) covered by compartment cover 29CC.

In order to install a laser assembly 30, the user would preferably remove compartment cover 29CC and/or cover 27C, as shown in FIG. 3B. Such action would expose compartment 29C and an opening 270 in upper blade guard 27.

The user would then preferably install in compartment 29C a power supply assembly 40. Power supply assembly 40 may have a housing 41, a switch 41 for turning the laser assembly on and off, and the necessary electronics for driving the laser assembly 30, including (if necessary) a power supply that receives 120 VAC mains voltage and converts it to a voltage usable by the laser assembly 30.

Preferably, handle assembly 29 contains an input connector 431 that quickly connects to power supply assembly 40 for providing power supply assembly 40 with the input power, such as 120 VAC mains voltage. Handle assembly 29 may also contain an output connector 430 that quickly connects to power supply assembly 40 for transmitted the output power to the laser assembly 30. Persons skilled in the art will recognize that the user would preferably connect connectors 431, 430 to power supply assembly 40, then affix or bolt housing 41 to handle assembly 29 and/or compartment 29C.

Preferably connector 430 is connected to connector 44, which is preferably connected to the laser assembly 30, as shown in FIGS. 3-4. A cover 45 preferably hides and/or maintains in place the wire extending between connectors 430, 44.

The user preferably quickly connects connector 44 to laser assembly 30 and disposes laser assembly 30 on upper blade guard 27. Preferably, laser assembly 30 is affixed to upper blade guard 27 via screws.

Persons skilled in the art will recognize that laser assembly 27 may be disposed on other parts of saw assembly 20, such as arm 22 or the housing of motor 24, etc. For the purposes of the discussion relating to laser assembly 20, housing 12, trunnion 13, and/or rail(s) 14 may also be considered part of saw assembly 20.

Referring to FIGS. 3 and 5-7, laser assembly 30 may include a housing 31. At least one pin or rail 32 may protrude from housing 31. Body 33 may be slidingly disposed on rail(s) 32. Preferably a spring 33S may be disposed between body 33 and rail(s) 32 to take up any play therebetween.

A screw 34 extending through housing 31 may threadingly engaged by a protrusion 33P on body 33. A spring 34S is preferably disposed housing 31 and protrusion 33P. Persons skilled in the art will recognize that an arrangement where screw 34 is threadingly engaged to housing 31 and captured by protrusion 33P, such as the arrangement disclosed in US Patent No. 6,688,203, is an equivalent arrangement. With either arrangement, rotation of screw 34 will result in the side-to-side movement of body 33.

A holder 35 for holding a laser diode assembly 36 may be pivotably attached to body 33. Preferably holder 35 is made of plastic. Body 33 may have protrusions 33H which capture a hinge portion 35H of holder 35, allowing holder 35 to rotate thereabout. A screw 35S may be threadingly engaged to body 33 and contact holder 35 to pivot holder 35 in one direction, e.g., downwardly. A spring 35B may be provided between body 33 and holder 35 to bias holder 35 in the other direction, e.g., upwardly. Accordingly, rotation of screw 35S will result in the pivot movement of holder 35.

A rotating barrel 37 may be fixedly attached to laser diode assembly 36. Barrel 37 may have a protrusion 37P. A screw 38S may extend through a slot 37S in protrusion 37P and threadingly engage a boss 33B of body 33. A spring 38B may be disposed between boss 33B and protrusion 37P. Accordingly, rotation of screw 38S will result in the rotational movement of laser diode assembly 36 about its longitudinal axis.

Persons skilled in the art should recognize that laser assembly 30 may be disposed directly on upper blade guard 27, where upper blade guard 27 would constitute housing 31.

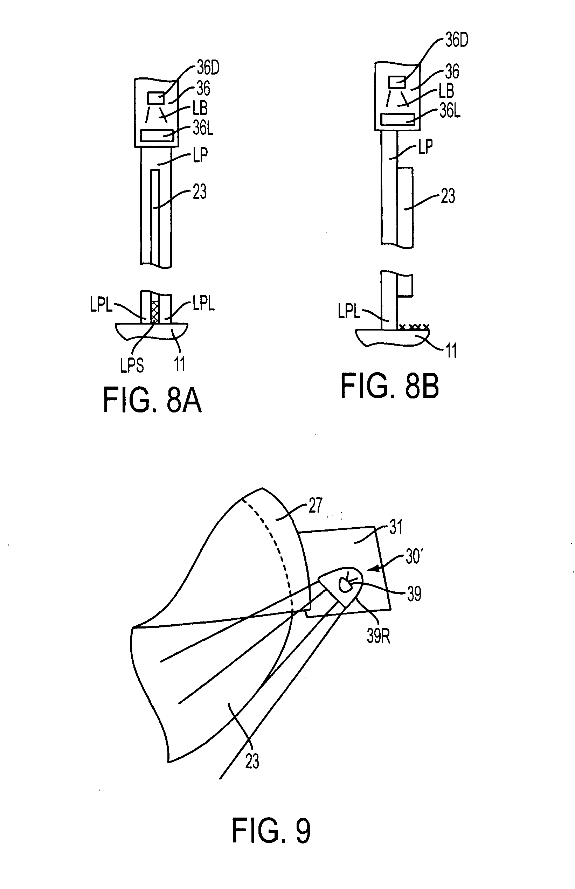

Referring to FIG. 8, laser diode assembly 36 preferably has a laser diode 36D for emitting a light beam LB, and a line lens 36L for converting the light beam LB into a light plane LP, which forms a light line when the light plane LP intersects the table assembly 11 and/or workpiece. Laser diode assembly 36 may include a collimating lens (not shown) disposed between laser diode 36D and line lens 36L.

As shown in FIG. 8A, light plane LP may be wider than blade 23, so that light plane LP moves past both sides of blade 23, forming a shadow LPS between lighted portions LPL. Alternatively, light plane LP may move past only one side of blade 23, forming a light line LPL indicative of the blade position.

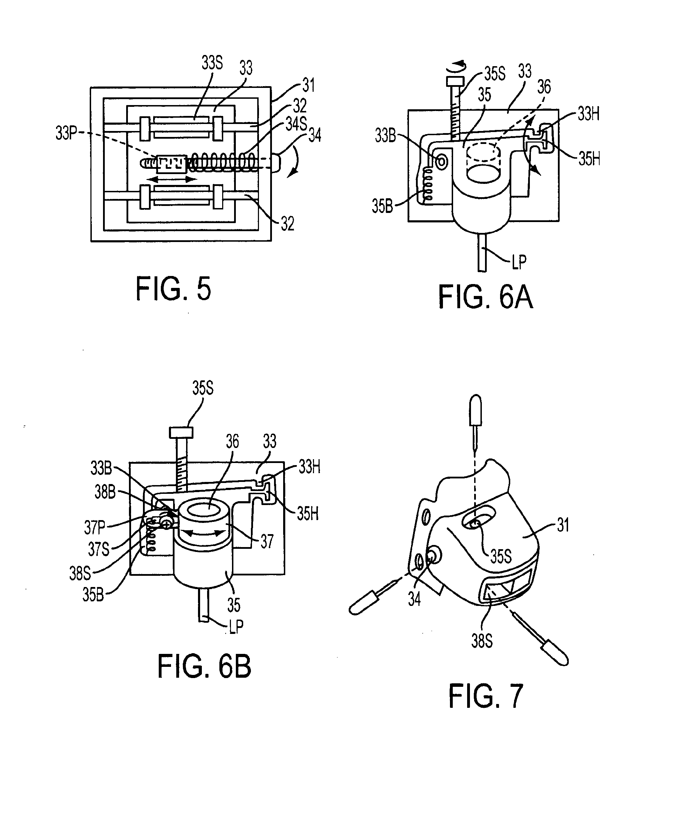

Either way, it is desirable to adjust laser diode assembly to ensure that a shadow LPS is between two lighted portions LPL, or that light line LPL is substantially coplanar with blade 23. Referring to FIGS. 5-7, the user would rotate screw 38S (thus rotating the laser diode assembly 36 about its longitudinal axis) in order to ensure that the light line LPL is parallel to the cutting line of blade 23, i.e., the cut line generated by blade 23. The user would also rotate screw 35S (thus rotating holder 35) in order to ensure that the light plane LP is parallel to the plane of blade 23, rather than inclined relative to blade 23. Finally, the user would rotate screw 34 (thus moving body 33 side to side) to ensure that blade 23 is inside the width of light plane LP (for the embodiment of FIG. 8A) or that light plane LP is next to blade 23 (for the embodiment of FIG. 8B).

An alternative example is shown in FIG. 9, where a light assembly 30' is preferably installed in the same manner as laser assembly 30. All the teachings related to laser assembly 30, including its manner of installation, are hereby incorporated by reference. Like numerals refer to like parts.

Light assembly 30' preferably has at least one light-emitting diode 39. Preferably such diode 39 provides substantially white light. A reflector 39R may be disposed around diode 39 to reflect the light emitted by diode 39. Diode 39 and/or reflector 39R may be supported by housing 31.

Persons skilled in the art will recognize that the light emitted by diode 39 will preferably move past both sides of blade 23, forming a shadow LPS between lighted portions LPL. Because of the wider beam of the light emitted by diode 39, it may not be necessary to provide an adjustment means as provided in laser assembly 30.

As mentioned before, lower blade guard 25 preferably has slots 25S. Such slots 25S allow the light plane LP to extend therethrough. This allows a light line to form on table assembly 11 and/or a workpiece even when saw assembly 20 is in the upper position. Persons skilled in the art will recognize, if lower blade guard 25 is not fully transparent or is opaque, the light line formed on table assembly 11 and/or the workpiece will appear broken. Such line however will become solid when the saw assembly 20 is moved towards the lower position, and the lower blade guard 25 is moved, exposing blade 23. Such arrangement is disclosed in US Patent No. 6,755,107. Persons skilled in the art should also recognize that lower blade guard 25 may be fully transparent, providing for a substantially solid light line, regardless of the position of the lower blade guard 25.

Persons skilled in the art will also recognize that lower blade guard 25 may be provide with slots 25S throughout its periphery in order to allow a user to view blade 23, as disclosed in US Patent No. 5,199,343..

## Claims

1. A chop saw (100) comprising:
a base assembly (10);
a saw assembly (20) pivotally attached to the base assembly for movement between an upper position and a lower position, the saw assembly including a motor (24), a blade (23) driven by the motor, an upper blade guard (27) covering an upper part of the blade, a lower blade guard (25) covering a lower part of the blade and pivotally attached to the upper blade guard at a first pivot point (25P), a boss (26) disposed on the lower blade guard , a link (28) pivotally attached to the base assembly at one end (28P) and contacting the boss at another end, **characterised in that** the boss (26) is disposed on the lower blade guard at a point lower than the first pivot point (25P) when the saw assembly is in the upper position with the lower blade guard completely covering the lower part of the blade.

2. The chop saw of Claim 1, wherein the boss extends through a slot (28S) in the link.

## Patentansprüche

1. Eine Kappsäge (100), umfassend:
eine Grundanordnung (10);
eine Sägenanordnung (20), die zentral an der Grundanordnung, zur Bewegung zwischen einer oberen und einer unteren Position, angebracht ist, wobei die Sägenanordnung einen Motor (24), ein Blatt (23), das vom Motor betrieben wird, einen oberen Blattschutz (27), der einen oberen Teil des Blattes abdeckt, einen unteren Blattschutz (25), der einen unteren Teil des Blattes abdeckt und zentral an dem oberen Blattschutz an einem ersten Schwenkpunkt (25P) befestigt ist, ein runder Vorsprung (26), der auf dem unteren Blattschutz angeordnet ist, ein Gelenk (28), das zentral an der Grundanordnung an einem Ende (28P) befestigt ist und den runden Vorsprung an dem anderen Ende berührt, enthält, **dadurch gekennzeichnet, dass** der runde Vorsprung (26) auf dem unteren Blattschutz in einer Position, die niedriger als der erste Schwenkpunkt (25P) ist, angeordnet ist, wenn die Sägenanordnung in der oberen Position ist, wobei der untere Blattschutz den unteren Teil des Blattes komplett abdeckt.

2. Die Kappsäge gemäß Anspruch 1, wobei der runde Vorsprung sich durch einen Schlitz (28S) in das Gelenk erstreckt.

## Revendications

1. Scie pivotante (100), comprenant :
un ensemble de base (10) ;
un ensemble de scie (20) fixé à pivotement à l'ensemble de base pour un déplacement entre une position supérieure et une position inférieure, l'ensemble de scie comprenant un moteur (24), une lame (23) entraînée par le moteur, un garde-lame supérieur (27) recouvrant une partie supérieure de la lame, un garde-lame inférieur (25) recouvrant une partie inférieure de la lame et fixé à pivotement au garde-lame supérieur en un premier point pivot (25P), un bossage (26) disposé sur le garde-lame inférieur, une bielle (28) fixée à pivotement à l'ensemble de base à une extrémité (28P) et venant en contact avec le bossage à une autre extrémité, **caractérisé en ce que** le bossage (26) est disposé sur le garde-lame inférieur en un point inférieur au premier point pivot (25P) lorsque l'ensemble de scie se trouve en position supérieure avec le garde-lame inférieur qui recouvre complètement la partie inférieure de la lame.

2. Scie pivotante selon la revendication 1, dans laquelle le bossage s'étend à travers une fente (28S) dans la bielle.
